# EUROPÄISCHE PATENTSCHRIFT

(11) **EP 2 930 264 B1**
(45) Veröffentlichungstag und Bekanntmachung des Hinweises auf die Patenterteilung: **15.11.2023**
(21) Anmeldenummer: 15000404.2
(22) Anmeldetag: 11.02.2015
(51) Int. Cl.: D06F 93/00

(54) **Verfahren zum Erfassen eines Wäschestücks**
Method for detecting an item of laundry
Procédé de préhension d'une pièce de linge

(30) Priorität: 11.04.2014 DE 102014005355
(43) Veröffentlichungstag der Anmeldung: 14.10.2015
(73) Patentinhaber: Herbert Kannegiesser GmbH, 32602 Vlotho (DE)
(72) Erfinder: Tautz, Frank, 32369 Rahden (DE); Heinz, Engelbert, 32602 Vlotho (DE)
(74) Vertreter: Möller, Friedrich

(56) Entgegenhaltungen:
- EP-A1- 2 159 318
- EP-A2- 2 113 606
- EP-A2- 2 444 544
- WO-A1-97/49062
- DE-A1-102008 028 120
- DE-A1-102011 075 078
- GB-A- 1 556 077
- HATA SEIJI ET AL: "Vision System and Flexible Robot Hand for Cloth Handling Robot System", 2008 INTERNATIONAL CONFERENCE ON CONTROL, AUTOMATION AND SYSTEMS, 14 October 2008 (2008-10-14), - 17 October 2008 (2008-10-17), pages 692-697, XP055918338, Seoul DOI: 10.1109/ICCAS.2008.4694590 ISBN: 978-89-932-1501-4

## Beschreibung

Die Erfindung betrifft ein Verfahren zum Erfassen eines Wäschestücks gemäß dem Oberbegriff des Anspruchs 1.

Gewaschene Wäschestücke verlassen eine Waschmaschine üblicherweise ineinander verschlungen als Wäschehaufen. Bevor die so aus einer Waschmaschine kommenden Wäschestücke weiteren Behandlungsschritte unterzogen werden, beispielsweise dem Mangeln oder Sortieren, müssen sie vereinzelt werden. Insbesondere weil die weiterführenden Behandlungsschritte der gewaschenen Wäschestücke je nach Art des Wäschestücks variieren können, ist es wesentlich, den Wäschehaufen zunächst zu vereinzeln, um jedes Wäschestück einzeln erfassen zu können und gegebenenfalls zu sortieren.

Es kann in Wäschereien auch erforderlich sein, Wäschestücke die bereits vereinzelt sind, einzeln zu erfassen bzw. zu ergreifen, um sie einem weiteren Behandlungsschritt zu zuführen. Werden die Wäschestücke beispielsweise in einem nächsten Schritt an Klammern eines Transportförderers übergeben, ist es vorteilhaft, wenn die Wäschestücke gleich so erfasst werden, dass sie direkt an die Klammern des Transportförderers übergeben werden können.

Es sind bereits Verfahren bekannt, bei denen aus Wäschehaufen einzelne Wäschestücke erfasst bzw. herausgegriffen werden oder schon vereinzelte Wäschestücke erfasst bzw. ergriffen werden müssen. Es hat sich jedoch bei diesen bekannten Verfahren gezeigt, dass häufig mehrere Wäschestücke gleichzeitig herausgegriffen werden. Außerdem kann es bei den bekannten Verfahren vorkommen, dass aufgrund einer ungünstigen Stelle des Wäschestücks, die von dem Greifmittel angesteuert wurde, das Wäschestück gar nicht erfasst wird. In den Fällen, in denen mehrere Wäschestücke ergriffen werden oder gar kein Wäschestück ergriffen wird, erfolgt die weitere Behandlung der Wäschestücke fehlerhaft oder es wird eine Bewegung des Erfassungsmittels durchgeführt, ohne dass eine Wäschestück bewegt wird. Damit lässt sich eine zuverlässige und wirtschaftliche Vereinzelung der Wäschestücke nicht erreichen. Die Folge daraus sind Leistungseinbußen. Bekannte Verfahren zum Erkennen einzelner Wäschestücke, wie beispielsweise in US 1 556 077 oder in "Vision System and Flexible Robot Hand for Cloth Handling Robot System", HATA SEIJI et al., 2008 International Conference on Control Automation and Systems, 14. October 2008, Seiten 692 - 697 beschrieben, können nicht die notwendigen Informationen über die Wäschestücke generieren und die Wäschestücke entsprechend effizient handhaben, so wie es die erfindungsgemäße Lösung vorsieht.

Insbesondere offenbart die Veröffentlichung "Vision System and Flexible Robot Hand for Cloth Handling Robot System", HATA SEIJI et al., 2008 International Conference on Control Automation and Systems, 14 October 2008, Seiten 692 - 697, ein Robotersystem mit einem Sichtsystem, wobei das Robotersystem in der Lage ist, ein Wäschestück an einer Ecke oder an seinem Höchsten Punkt mit einem Erfassungsmittel zu ergreifen und abtransportieren, und eine dreidimensionale, bilderzeugende, bildgebende Maßnahme, wobei die Topographie des Wäschestücks, anhand der Topographie mindestens einer Stelle ermittelt wird, und wobei das Erfassungsmittel gezielt gesteuert an die Stelle herangefahren und das Wäschestück vom Erfassungsmittel erfasst wird.

Hiervon ausgehend liegt der Erfindung die Aufgabe zugrunde, ein Verfahren zum zuverlässigen und leistungsfähigen Erfassen eines Wäschestücks zu schaffen.

Ein Verfahren zur Lösung dieser Aufgabe weist die Maßnahmen des Anspruchs 1 auf. Dadurch, dass die Topographie des Wäschestücks durch eine dreidimensionale bilderzeugende, bildgebende Maßnahme, wie beispielsweise eine 3D-Kamera, ermittelt wird und anhand dieser Topographie mindestens eine Stelle des Wäschestücks ermittelt, an der das Wäschestück durch ein Erfassungsmittel erfasst werden soll und/oder bevorzugt erfasst werden kann, und das Erfassungsmittel gezielt gesteuert an die Stelle herangefahren und das Wäschestück vom Erfassungsmittel erfasst wird, kann erreicht werden, dass zuverlässig immer nur ein Wäschestück erfasst und/oder das Wäschestück an der vorgesehenen Stelle ergriffen bzw. in einer sonstigen Weise erfasst wird. Die Topographie des Wäschestücks ergibt sich dabei aus der Gesamtheit der Oberfläche bzw. Unterfläche und der Randbereiche des Wäschestücks. Bei der ermittelten bevorzugten Stelle zum Erfassen des Wäschestücks handelt es sich um die Stelle, die von dem Erfassungsmittel besonders günstig bzw. schnell ergriffen werden kann und die vorteilhaft für die weitere Behandlung des Wäschestücks ist. Diese Stelle wird als Bereich des Wäschestücks bestimmt mit einer größten Krümmung, einem Knick, einer Falte, einer Kante und/oder einer Ecke.

Dadurch, dass sich die Wäschestücke nach dem Waschen in einem beliebigen bzw. zufällig zerknitterten Zustand befinden, ist ihre Topographie auch beliebig; kann somit eine unendliche Zahl von Formen einnehmen. Erfindungsgemäß kann vorgegeben werden, an welcher Stelle des Wäschestücks dieses erfasst werden soll. Es ist aber auch genauso vorgesehen, dass mindestens eine Stelle ermittelt wird, an der das Wäschestück überhaupt ergriffen werden kann.

Weiter sieht es die Erfindung vor, dass die Topographie des Wäschestücks durch einen Laserscanner erstellt wird. Dabei kann das Wäschestück auf einer beliebigen Unterlage liegen, z.B. auf einem Förderer, der das Wäschestück dem Erfassungsmittel zuführt.

Die Topographie des Wäschestücks wird dort bestimmt, wo das Wäschestück auch erfasst werden soll. Die Bestimmung der Topographie des Wäschestücks kann durch eine konventionelle, mit einem Computer auslesbare, Kamera bzw. Digitalkamera erfolgen, die ein herkömmliches zweidimensionales Abbild bzw. Foto des Wäschestücks erstellt. Durch zusätzliche Tiefeninformationen, beispielsweise Abstandsmessungen, des Fotos des Wäschestücks durch einen dem Wäschestück oder der Unterlage beigefügten Maßstab kann anhand der Informationen des zweidimensionalen Fotos und des Maßstabes die dritte Raumdimension des Fotos bestimmt werden. Anhand dieser Informationen lässt sich die Topographie des Wäschestücks mittels Computer bestimmen und jedem Punkt des Wäschestücks ein Koordinatentriplett X, Y, Z zuordnen. Durch diese Koordinaten lässt sich die Topographie bzw. ein Höhenprofil des Wäschestücks computergestützt errechnen. Anhand dieses Höhenprofils kann ermittelt werden, welcher Bereich des Wäschestücks besonders vorteilhaft zum Erfassen ist und/oder welche Stellen des Wäschestücks zum Erfassen aufgrund der ermittelten Topographie besonders geeignet sind.

Alternativ können auch zur Erstellung der Topographie bzw. des Höhenprofils des Wäschestücks 3D-Kameras verwendet werden, um dem Betrachter einen räumlichen Eindruck des Wäschestücks zu vermitteln. Durch die Darstellung des Wäschestücks mittels 3D-Kamera lassen sich die Entfernungen aller Punkte des Wäschestücks zueinander ermitteln, insbesondere die Koordinaten X, Y, Z für jeden Punkt des Wäschestücks. Bei einer derartigen 3D-Kamera kann es sich um eine Stereo-Kamera handeln, bei der das Wäschestück mit mindestens zwei Kameras gleichzeitig aus verschiedenen Blickwinkeln aufgenommen wird. Der Abstand zweier Kameraobjektive entspricht dabei üblicherweise dem Abstand der menschlichen Augen. Das daraus resultierende Bilderpaar wird den Augen des Betrachters wieder getrennt vorgelegt, wodurch ein räumlicher Eindruck entsteht. Für den vorliegenden Zweck, werden die Bilder in einem Computer verarbeitet und so direkt die Distanzen zwischen den Punkten auf dem Wäschestück bzw. den Koordinaten und deren Höhe gegenüber einer Referenzhöhe bestimmt.

Eine weitere Möglichkeit zur Aufnahme eines dreidimensionalen Bildes stellt die Triangulation dar. Bei einem Triangulationssystem wirft eine Lichtquelle ein definiertes Muster auf das Wäschestück. Dieses Muster wird auf der Oberfläche des zerknitterten Wäschestücks verzerrt. Zwei Kameras nehmen dieses verzerrte Muster aus zwei verschiedenen Blickwinkeln auf und aus der Verzerrung des Musters wird die Topographie bzw. das Höhenprofil des Wäschestücks mittels Computer bestimmt.

Außerdem kann die Topographie des Wäschestücks mittels eines Laserscanners bestimmt werden. Als Laserscanning wird das zeilen- oder rasterartige Überstreichen von Oberflächen mit einem Laserstrahl bezeichnet. Während des Überstreichens werden der Laserstrahl und die Oberfläche von einer Kamera aufgenommen. Durch dieses Überstreichen der Oberfläche durch einen Laserstrahl wird die Oberfläche vermessen und mit diesen Messdaten ein sehr genaues Abbild dieser Oberfläche erstellt. Ein solcher Laserscanner besteht aus einem Scan-Kopf und einer Treiber- bzw. Ansteuerelektronik. Die Elektronik besteht aus einem leistungselektronischen Teil, der die Ströme für die Antriebe liefert, und aus einer z. B. auf einem Computer oder einer in ein System eingebettete Scanner-Software, die der Treiberelektronik entspricht. Im Scan-Kopf wird der Laserstrahl so abgelenkt, dass er kontinuierlich die gesamte Oberfläche des abzuscannenden Objektes erfasst. Es können auch mehrere Laserstrahlen bzw. ein Fächer von Laserstrahlen verwendet werden. Die Ablenkung des Laserstrahls erfolgt beispielsweise durch die Veränderung der Orientierung eines Spiegels im Scan-Kopf (Spiegelscanner).

Für das dreidimensionale Laserscanning besitzt der Scan-Kopf neben zwei Spiegeln für die X- und Y-Achse noch eine verstellbare Optik für die Tiefe, also die Z-Achse. Dadurch wird es möglich, dass der Laser auch eine dritte Dimension ansteuert.

Eine weitere Möglichkeit ein dreidimensionales Bild des Wäschestücks zu erstellen, besteht in der Anwendung eines 3D-Rigs. Bei diesem 3D-Rig werden zwei Kameras zu einem 3D-Kamerasystem verbunden, um stereoskopische 3D-Fotos aufzunehmen.

Gemäß einer bevorzugten Weiterentwicklung der Erfindung ist es vorgesehen, dass als Stelle, an der das Wäschestück bevorzugt erfasst wird, ein Bereich des Wäschestücks mit einer größten Krümmung, einem Knick, einer Falte, einer Kante und/oder einer Ecke des Wäschestücks, bestimmt wird. So sind die Bereiche bevorzugt, in denen zwei benachbarte Punkte Tangenten aufweisen, die einen spitzen bzw. spitzesten Winkel einschließen. Dabei kann der Abstand dieser zwei benachbarten Punkte beliebig erwählt werden. Die Krümmung des Bereiches bzw. der Winkel zwischen zwei Tangenten wird anhand der Informationen ermittelt, die durch eine der oben genannten bildgebenden Maßnahmen bestimmt wurden.

Es ist außerdem denkbar, dass anhand der erstellten Topographie des Wäschestücks gezielt nach einem Knick, einer Falte, einer Kante und/oder einer Ecke des Wäschestücks gesucht wird, um diese zu ergreifen. Bei diesem Suchvorgang nach bestimmten Bereichen des Wäschestücks werden die aufgenommenen Bilder mit einer Bibliothek mit Bildern von Knicken, Falten, Ecken, Rändern auf einem Computer automatisch abgeglichen. Alternativ lässt sich beispielsweise ein Knick oder eine Kante dadurch bestimmen, dass sie eine maximale Krümmung bzw. einen minimalen Krümmungsradius aufweisen. Durch die Verwendung von modernen Digitalkameras und Computern erfolgt eine derartige Erkennung bzw. Auswertung der Topographien sehr schnell. Durch eine Kombination der Laserscanning-Maßnahmen mit konventioneller bildgebenden Kameratechnik, lässt sich neben der Topographie auch die Farbe und/oder beispielsweise die Gewebeart bzw. Musterung des Wäschestücks bestimmen.

Eine weitere vorteilhafte Weiterbildung der vorliegenden Erfindung besteht darin, dass das Wäschestück an einer Falte oder Kante oder einer Ecke erfasst wird. Nach der Bestimmung der Topographie des Wäschestücks besitzt das System Kenntnis von der gesamten Beschaffenheit und Orientierung des ungeordneten Wäschestücks. Anhand dieser Informationen kann entschieden werden, an welcher Stelle des Wäschestücks dieses ergriffen werden soll. So lässt sich beispielsweise für den Fall, dass mehr Kanten oder Ecken bestimmt werden, als ein Wäschestück aufweisen sollte, mindestens ein weiteres Wäschestück vorliegt. In einem derartigen Fall werden die mindestens zwei zusammenhängenden Wäschestücke abgeführt, erneut dem Vereinzelungsprozess unterzogen und/oder umorientiert. Danach werden die einzelnen Wäschestücke dem Erfassungsmittel erneut zugeführt.

Gemäß der Erfindung wird die bevorzugte Stelle zum Erfassen des Wäschestücks aus mehreren Alternativen ausgesucht. Bei der Bestimmung der Topographie werden sämtliche Maxima bzw. Minima des Höhenprofils ermittelt. Diese Messdaten werden derart gewertet, dass beispielsweise besonders hochstehende Bereiche, die einen großen Krümmungsradius aufweisen, bevorzugt sind und andere Bereiche, die eher flach ausgestaltet sind, weniger bevorzugt sind. Neben den so bestimmten Bereichen stellen die Randbereiche bzw. Ecken oder Falten Möglichkeiten zum Erfassen des Wäschestücks dar.

Weiter ist es vorgesehen, dass mindestens eine solche Stelle des Wäschestücks ermittelt wird, die von dem Erfassungsmittel besonders günstig bzw. schnell ergriffen werden kann. Insbesondere für die weitere Behandlung des Wäschestücks kann es vorteilhaft sein, wenn das Wäschestück auf eine bestimmte Art und Weise bzw. an einer bestimmten Stelle ergriffen wird. Für den Fall, dass im nächsten Behandlungsschritt das Wäschestück einer Mangel zugeführt wird, könnte es vorteilhaft sein, wenn das Wäschestück an einer Ecke oder einem Randbereich bzw. Kante ergriffen wird. Für den Fall, dass im nächsten Behandlungsschritt die aufgenommenen Wäschestücke lediglich sortiert werden, spielt es keine Rolle, wie die Wäschestücke bzw. an welcher Stelle die Wäschestücke aufgenommen werden.

Als eine weitere besonders vorteilhafte Ausgestaltung der vorliegenden Erfindung ist es vorgesehen, dass die räumliche Orientierung des Erfassungsmittels der zu ergreifenden Stelle des Wäschestücks entsprechend angepasst wird. Ist eine Stelle für das Erfassen des Wäschestücks besonders gut geeignet, insbesondere für die weitere Behandlung des Wäschestücks, kann das Erfassungsmittel aus seiner Anfangsorientierung gedreht werden und so verfahren werden, dass es die besagte Stelle erfassen kann. Dazu ist es vorgesehen, dass dem Erfassungsmittel Gelenke zugeordnet sind, um die das Erfassungsmittel bewegt wird.

Insbesondere ist es vorgesehen, dass das Wäschestück durch ein als Greifer oder Sauger ausgebildetes Erfassungsmittel erfasst wird. Bei dem Greifer ist es vorgesehen, dass das Wäschestück durch mindestens zwei Greifelemente erfasst wird. Wenn das Erfassungsmittel als Sauger ausgestaltet ist, wird das Wäschestück durch einen Unterdruck, der sich in einem Endbereich des Saugers bildet, angesaugt und solange gehalten, bis der Unterdruck gegenüber dem Atmosphärendruck nachlässt.

Die Erfindung sieht es vorzugsweise vor, dass die Position jedes Punktes des Wäschestücks im Raum bzw. dessen Entfernung, insbesondere zum Erfassungsmittel, bestimmt wird und anhand der Position die Stellen ermittelt werden, an denen das Wäschestück ergriffen werden kann. Dabei werden die Informationen über die Topographie des Wäschestücks derart aufbereitet, dass das Erfassungsmittel jeden beliebigen Punkt des Wäschestücks gezielt und automatisiert ansteuern kann. Über die Steuerungselektronik erhält das Erfassungsmittel die aus der Bestimmung der Topographie ermittelten Koordinaten derjenigen Punkte, die für das Erfassen des Wäschestücks besonders vorteilhaft sind. Nach dem Erfassen des Wäschestücks und dem der Weiterbehandlung entsprechenden Ablegen desgleichen, werden dem Erfassungsmittel die Koordinaten des nachfolgend zu erfassenden Wäschestücks übertragen, sodass das Erfassungsmittel keine Leerlaufzeiten hat. Es ist aber auch denkbar, dass sich das Erfassungsmittel nach dem Abführen des Wäschestücks in eine Ausgangslage zurückbegibt.

Bevorzugt ist es weiter vorgesehen, dass durch die bildgebenden Maßnahmen störende Einflüsse, wie beispielsweise der Bildhintergrund, herausgefiltert werden, vorzugsweise optisch herausgefiltert werden kann. Bei bildgebenden Bearbeitungsverfahren kann es sich oftmals als Problem herausstellen, dass die Umgebung des aufzunehmenden Objektes derartige Störinformationen emittiert, dass die Bilderfassung davon beeinträchtigt wird. Dadurch, dass die bildgebende Maßnahme auf den Bereich des Wäschestücks fokussiert ist, werden sämtliche Umwelteinflüsse ausgeblendet. Insbesondere durch die Maßnahmen des Laserscannings werden nur Informationen von dem Wäschestück für die Bestimmung der Topographie verwendet.

Als besonders vorteilhafte Weiterbildung der vorliegenden Erfindung hat sich herausgestellt, dass ein Wäschestück, für das keine Stelle zum Erfassen bestimmt werden kann, abgefördert und/oder umorientiert wird und anschließend die Topographie desselben Wäschestück ermittelt wird. In einigen Fällen kann das Wäschestück derartig auf der Unterlage bzw. dem Förderer orientiert sein, dass von den bildgebenden Maßnahmen keine ausgezeichnete Stelle identifizierbar ist. Damit ein solches Ereignis das gesamte Verfahren nicht zum Stoppen bringt, wird das Wäschestück einfach weitergeführt, ggf. umorientiert und anschließend zur Bestimmung der Topographie erneut zugeführt. Falls ein solches Ereignis mehrmals hintereinander für das gleiche Wäschestück auftritt, kann dieses ganz aus dem Prozess ausgeführt werden.

Es ist erfindungsgemäß vorgesehen, dass durch das Erfassungsmittel jeweils nur ein einzelnes Wäschestück aufgenommen wird. Dadurch, dass vor der Erfassung des Wäschestücks durch das Erfassungsmittel die Stelle, an dem das Wäschestück erfasst wird, bestimmt wird, ist es nahezu ausgeschlossen, dass durch das Erfassungsmittel zwei Teile oder mehr erfasst werden. Vielmehr ist es gerade vorgesehen, dass genau nur ein einziges Wäschestück durch das Erfassungsmittel erfasst wird und ggf. für die weitere Behandlung des Wäschestücks bereits durch das Erfassungsmittel derart gewendet oder gedreht wird, dass es dem nächsten Behandlungsschritt direkt zugeführt werden kann.

Falls durch das Erfassungsmittel kein Wäschestück erfasst wird, wird dieser Schritt entweder erneut durchgeführt, oder das Wäschestück wird ohne erfasst zu werden, abgefördert.

Ein weiteres vorteilhaftes Ausführungsbeispiel des zuvor beschriebenen Verfahrens weist die Maßnahme des Anspruchs 13 auf. Demnach ist es vorgesehen, dass die Topographie des Wäschestücks durch eine dreidimensionale bilderzeugende, bildgebende Maßnahme ermittelt wird und aufgrund der Topographie das Wäschestück durch das Erfassungsmittel einer entsprechenden weiteren Behandlungsvorrichtung zugeführt wird. Bei einer derartigen weiteren Behandlungsvorrichtung kann es sich beispielsweise um eine Mangel, einen weiteren Förderer, einen Sortierbehälter oder ähnliches handeln.

Weiter ist es vorgesehen, dass durch die ermittelte Topographie Eigenschaften des Wäschestücks wie beispielsweise dessen Größe oder Form ermitteln werden können. Außerdem ist es vorgesehen, dass die Topographie durch bildgebende Maßnahmen ermittelt wird und Eigenschaften des Wäschestücks wie beispielsweise Farbe oder Gewebeart durch konventionelle Digitalkameras ermittelt werden. Durch die Ermittlung dieser Eigenschaften ist eine entsprechende Zuordnung für das weitere Behandeln des Wäschestücks möglich. Insbesondere das Sortieren des Wäschestücks nach den Eigenschaften wird so möglich.

Es ist weiter erfindungsgemäß vorgesehen, dass durch das Erfassungsmittel das Gewicht des erfassten Wäschestücks bestimmt wird. Dazu weist das Erfassungsmittel selbst oder dessen Befestigung eine Waage auf, die vorzugsweise elektronisch ausgelesen wird.

Darüber hinaus ist es denkbar, dass durch das Erfassen eines Wäschestücks durch das Erfassungsmittel der Wäschehaufen gezielt vereinzelt wird. Nachdem die Wäschestücke die Waschmaschine verlassen, bilden sie für gewöhnlich noch einen Wäschehaufen aus losen, zusammenhängenden Wäschestücken. Das Erfassungsmittel kann so gezielt ein Wäschestück, das beispielsweise mit einem Bereich aus dem Wäschehaufen herausragt, erfassen und es danach aus dem Wäschehaufen herausziehen. So lassen sich nach und nach die einzelnen Wäschestücke des Wäschehaufens vereinzeln, ohne dass der Wäschehaufen als Ganzes vor dem Erfassen des einzelnen Wäschestücks vereinzelt werden muss.

Ein bevorzugtes Ausführungsbeispiel der Erfindung wird nachfolgend anhand der Zeichnung näher erläutert. In dieser zeigen:
- Fig. 1: Ein Greifer erfasst ein Wäschestück zum Vereinzeln,

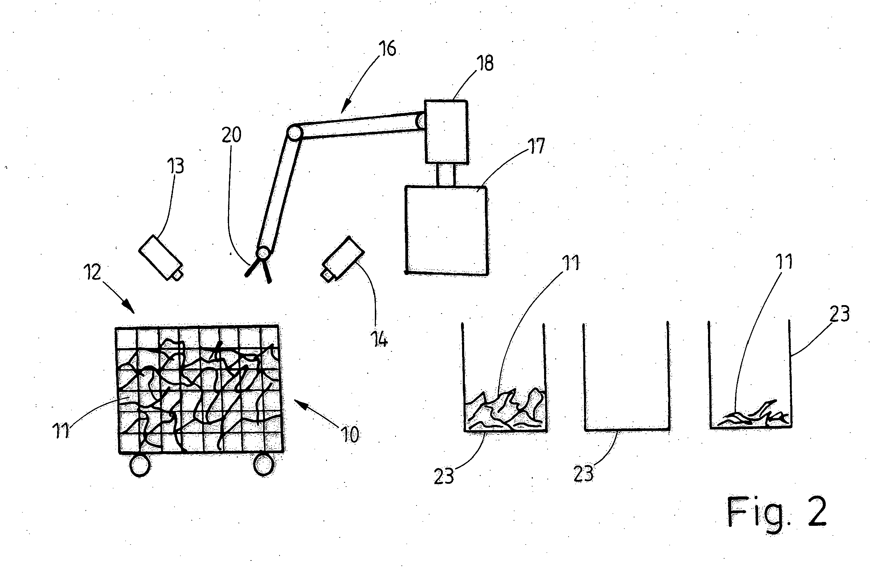

- Fig. 2: der Greifer erfasst ein Wäschestück zum Absortieren,
- Fig. 3: ein Greifer erfasst ein Wäschestück zum hängendem Weitertransport, und
- Fig. 4: ein Laserscanner ermittelt die Topographie eines Wäschestückes.

In den Figuren der Zeichnung ist ein Verfahren dargestellt, bei dem aus einem, zum Beispiel aus einer Waschmaschine kommenden Wäschehaufen, einzelne Wäschestücke erfasst werden. Das erfasste Wäschestück wird darauf in Abhängigkeit von seinen Eigenschaften einem weiteren Behandlungsschritt zugeführt.

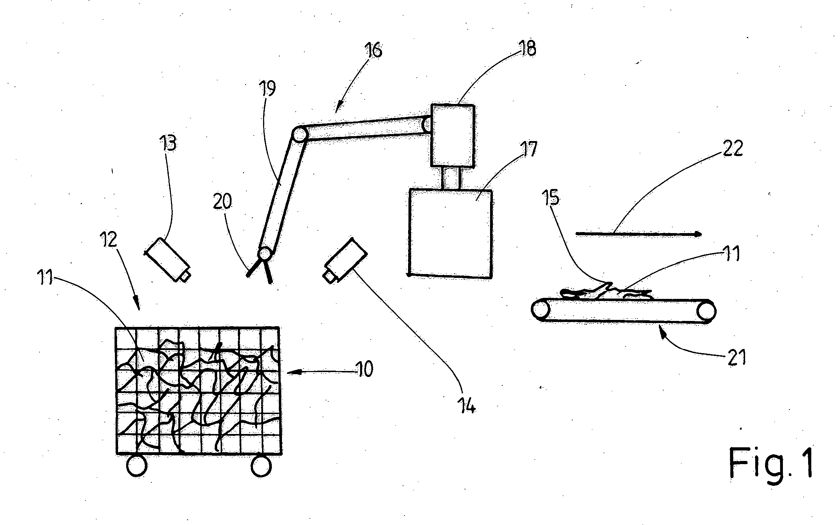

Gewaschene Wäsche aus einer Waschmaschine wird oftmals vor einer weiterführenden Behandlung in einem Wäschewagen 10 zwischengelagert. Aber auch Wäschestücke 11, die zunächst gesammelt werden, bevor sie gewaschen werden, können in einem solchen Wäschewagen 10 gesammelt oder gelagert werden. Somit können sich in einem Wäschewagen 10 schmutzige Wäschestücke 11 oder gewaschene Wäschestücke 11 befinden. Die Wäschestücke 11 bilden im Wäschewagen 10 einen Wäschehaufen 12. Besonders nach dem Waschen und dem anschließenden Entwässerungsprozess der nassen Wäschestücke 11 sind diese zu einem Wäschehaufen 12 ineinander verschlungen. Bei derartigen Wäschehaufen 12 sind einzelne Wäschestücke 11 kaum noch zu erkennen bzw. voneinander zu trennen. Vielmehr bilden die einzelnen Wäschestücke 11 einen anscheinend zusammenhängenden Wäschehaufen 12 (Fig. 1). Für die Weiterbehandlung der Wäschestücke 11, wie beispielsweise dem Mangeln, müssen die einzelnen Wäschestücke 11 vereinzelt werden. Beim Vereinzeln greift ein Erfassungsmittel in den Wäschehaufen 12 hinein. Dabei kommt es vor, dass anstatt eines Wäschestücks 11 mehrere oder gar keins ergriffen wird.

Die Erfindung sieht es vor, dass zunächst ein Bild bzw. ein Foto von der nach oben weisenden Seite des Wäschehaufens 12 erstellt wird. Bei diesem Bild handelt es sich vorzugsweise um ein dreidimensionales Bild. Da sich dieses dreidimensionale Bild in drei Dimensionen bzw. Raumrichtungen erstreckt, nämlich in eine X-, eine Y- und eine Z-Richtung, sind sowohl die Höhen, als auch die Tiefen, insbesondere jede Form, erkennbar, die durch die zufällig vermengten Wäschestücke 11 gebildet werden. Bei diesem dreidimensionalen Bild des Wäschestücks 11 kann daher auch von einer Topographie der Wäschestücke 11 gesprochen werden.

Für die Bestimmung eines derartigen dreidimensionalen Abbildes bzw. der Topographie der Wäschestücke 11 sind in dem in Fig. 1 dargestellten Ausführungsbeispiel zwei Kameras 13, 14 vorgesehen. Die Positionierung der Kameras 13, 14 über dem Wäschehaufen 12, insbesondere deren Abstand, ist hier nur symbolisch dargestellt und kann vielmehr den Aufnahmebedingungen entsprechend angepasst werden. Bei dem in Fig. 1 dargestellten Verfahren zur Aufnahme der Topographie der Wäschestücke 11 wird mittels der Kameras 13, 14 eine stereoskopisches Maßnahme angewandt. Bei der Stereoskopie wird ein Gegenstand, hier die Wäschestücke 11, von mindestens zwei Kameras aus zwei verschiedenen Blickwinkeln betrachtet bzw. aufgenommen. Durch diese spezielle Aufnahme eines Gegenstandes mittels zwei Kameras aus zwei verschiedenen Blickwinkeln lässt sich ein dreidimensional erscheinendes Bild erstellen bzw. alle drei Raumkoordinaten bestimmen. Zur Bestimmung der dreidimensionalen Koordinaten X, Y, Z eines jeden Punktes auf der Oberfläche der Wäschestücke 11 wird die von den Kameras 13 und 14 aufgenommenen Bilder bzw. Informationen mit einem nicht dargestellten Computer weiterverarbeitet.

Es ist auch denkbar, dass die Bilder der Wäschestücke von drei, vier oder mehr Kameras, die zeitgleich Bilder der Wäschestücke 11 erstellen, durch einen Computer ausgewertet werden. Bei der Aufnahme der Kameras der Wäschestücke 11 zur Bestimmung der Topographie der Wäschestücke 11 kann es sich um eine kontinuierliche Aufnahme handeln oder ein stroboskopartiges Aufnehmen von Fotos, beispielsweise im Sekundentakt.

Nachdem der Computer die Topographie aller sichtbaren sich im Wäschehaufen 12 befindlichen Wäschestücke 11 bestimmt hat, werden Stellen 15 auf den Wäschestücken 11 ermittelt, die für das Erfassen bzw. Vereinzeln der Wäsche besonders geeignet sind. Stellen 15, die für das Vereinzeln besonders geeignet sind, sind solche, an denen ein Wäschestück 11 erfasst werden kann und ohne großen Widerstand aus dem Wäschehaufen 12 herausgezogen werden kann. Als solche Stellen 15 eignen sich besonders Bereiche des Wäschestücks 11, die einen kleinen Krümmungsradius bzw. eine große Krümmung aufweisen, wie beispielsweise eine Falte, ein Knick, eine Kante oder eine Ecke. Für die Bestimmung solcher Stellen 15 wird beispielsweise durch den Computer die Topographie derart ausgewertet, dass von jeweils zwei benachbarten Punkten der Winkel zwischen zwei Tangenten bzw. tangentialen Ebenen dieser Punkte ermittelt wird. Ist dieser Winkel beispielsweise flach, hat das Wäschestück 11 an dieser Stelle 15 einen großen Krümmungsradius. Ist andererseits dieser Winkel spitz oder schneiden sich die Tangenten gar nicht, so ist von einem geringen Krümmungsradius auszugehen. Solche Stellen 15 eignen sich besonders zum Erfassen eines Wäschestücks 11.

Sobald eine geeignete Stelle 15 eines Wäschestücks 11 ermittelt wurde, die sich für das Erfassen des Wäschestücks 11 als besonders geeignet herausgestellt hat, wird das Wäschestück 11 an dieser Stelle 15 durch das Erfassungsmittel erfasst. Bei dem in Fig. 1 darstellten Erfassungsmittel handelt es sich um einen Greifer 16. Alternativ kann es sich jedoch auch um einen Sauger oder ein ähnliches Erfassungsmittel handeln. Der in Fig. 1 dargestellte Greifer 16 weist eine Basis 17 auf, auf dem sich drehbar ein Greiferkopf 18 befindet. Ausgehend von dem Greiferkopf 18 erstreckt sich ein Greiferarm 19 der aus mehreren Gliedern besteht, die durch Gelenke verbunden sind. Am Ende des Greiferarms 19 befindet sich eine zangenförmige Klammer 20. Diese Klammer 20 lässt sich computergesteuert automatisch öffnen und schließen. Zum Erfassen eines Wäschestücks 11 wird die Klammer 20 geschlossen. Zum Freigeben des Wäschestücks 11 wird die Klammer 20 wieder geöffnet. Der Greiferarm 19 ist im Zusammenspiel mit dem Greiferkopf 18 derart flexibel, dass der Greifer 16 mit seiner Klammer 20 jeden beliebigen Punkt in seiner Reichweite ansteuern kann. Zum Erfassen des Wäschestücks 11 wird die Klammer 20 geschlossen. Die Klammer 20 ist am Ende des Greiferarms 19 derart bewegbar, dass sie in nahezu alle Richtungen greifen kann.

Ist eine Stelle 15 des Wäschestücks 11 ermittelt worden, die sich besonders gut zum Erfassen des Wäschestücks 11 eignet, werden die Koordinaten der Stelle 15 an den Greifer 16 übertragen, so dass die Klammer 20 des Greifers 16 genau an die Stelle 15 des Wäschestücks 11 gefahren wird. Bei dem in der Fig. 1 dargestellten Greifer 16 handelt es sich lediglich um ein Ausführungsbeispiel. Der Greifer 16 kann auch jede beliebige andere, denkbare Form einnehmen.

Durch die Ermittlung der Topographie des Wäschestücks 11 können mehrere Stellen 15 ermittelt werden, die sich zum Erfassen des Wäschestücks 11 besonders gut eignen. Wenn mehrere solche Stellen 15 ermittelt werden, findet eine Wertung statt, welche Stelle 15 am besten geeignet ist. Außerdem ist es vorgesehen, dass spezielle Stellen 15 wie beispielsweise eine Kante oder eine Ecke eines Wäschestücks 11 als solche erkannt werden. Für diese Erkennung kann das Computersystem eine Bibliothek aufweisen mit einer Vielzahl von aufgenommenen Ecken bzw. Kanten, mit denen das aufgenommene Bild abgeglichen wird. Bei manchen weiteren Behandlungsschritten ist es notwendig, dass das Wäschestück 11 an der Ecke oder an einer Kante erfasst wird. Diese Informationen können über dem Computer an den Greifer 16 übertragen werden.

Nachdem das Wäschestück 11 durch den Greifer 16 erfasst wurde, wird dieses aus dem Wäschehaufen 12 gezogen und einem Förderer 21 zugeführt. Auf diesen Förderer 21 wird das vereinzelte Wäschestück 11 in Behandlungsrichtung 22 abtransportiert.

Bei der Erstellung des dreidimensionalen Bildes des Wäschestücks 11 durch die Kameras 13, 14 bzw. bei der Bestimmung der Topographie des Wäschestücks 11 werden nicht nur die dreidimensionalen Koordinaten eines jeden Punktes auf dem Wäschestück 11 bestimmt, sondern es werden auch konventionelle Bilder durch die Kameras 13 und/oder 14 von dem Wäschestück 11 aufgenommen. Diese aufgenommenen Bilder ermöglichen es, das einzelne Wäschestück 11 zu identifizieren bzw. seine Eigenschaften zu bestimmen, wie beispielsweise Größe, Farbe, Gewerbeart oder auch den Verschmutzungsgrad. Oftmals hängt die Weiterbehandlung eines Wäschestücks von diesen Eigenschaften ab. So werden beispielsweise Wäschestücke 11, die die gleiche Farbe aufweisen oder die gleiche Gewebeart besitzen, einer gemeinsamen Behandlung unterzogen. Um mehrere Wäschestücke 11, die die gleichen Eigenschaften bzw. Sortierkriterien aufweisen, gemeinsam weiterzubehandeln, werden sie zunächst entsprechend gesammelt. Die Eigenschaften des Wäschestücks 11 können entweder ermittelt werden, wenn das Wäschestück 11 sich noch im Wäschehaufen 12 befindet oder, wenn das Wäschestück 11 bereits durch den Greifer 16 erfasst wurde. Nach dem Erfassen des Wäschestücks 11 durch den Greifer 16 sortiert dieser das Wäschestück 11 in Behälter 23 ab. Für jede Eigenschaft bzw. für jedes Sortierkriterium der Wäschestücke ist ein separater Behälter 23 bzw. Sortierbehälter vorgesehen. Befindet sich in einem derartigen Behälter 23 eine gewisse Anzahl von Wäschestücken, werden diese einem nächsten Behandlungsschritt zugeführt.

Es ist weiter vorgesehen, dass der Greifarm 19 bzw. die Klammer 20 des Greifers 16 ein Mittel aufweist, um das Gewicht des erfassten Wäschestücks 11 zu bestimmen. Somit besteht auch die Möglichkeit, die Wäschestücke 11 ihrem Gewicht entsprechend, zu sortieren oder bei vorheriger Identifikation des einzelnen Wäschestücks 11 durch das bildgebende Verfahren, den Feuchtigkeitszustand des Wäschestücks 11 über das Gewicht zu bestimmen.

Bei einem weiteren Ausführungsbeispiel der vorliegenden Erfindung werden die Wäschestücke 11 dem Greifer 16 bereits, auf einen Förderer 24 liegend, vereinzelt zugeführt. Dabei wird die Topographie des Wäschestücks 11 von den Kameras 13 und 14 wie bereits beschrieben bestimmt, während das Wäschestück 11 auf dem Förderer 24 liegt. Zur Bestimmung der Topographie wird der Förderer 24 entweder kurz angehalten oder bewegt sich kontinuierlich. Auch bei diesem Ausführungsbeispiel wird die Topographie durch stereoskopische Maßnahmen durch die Kameras 13 und 14 bestimmt.

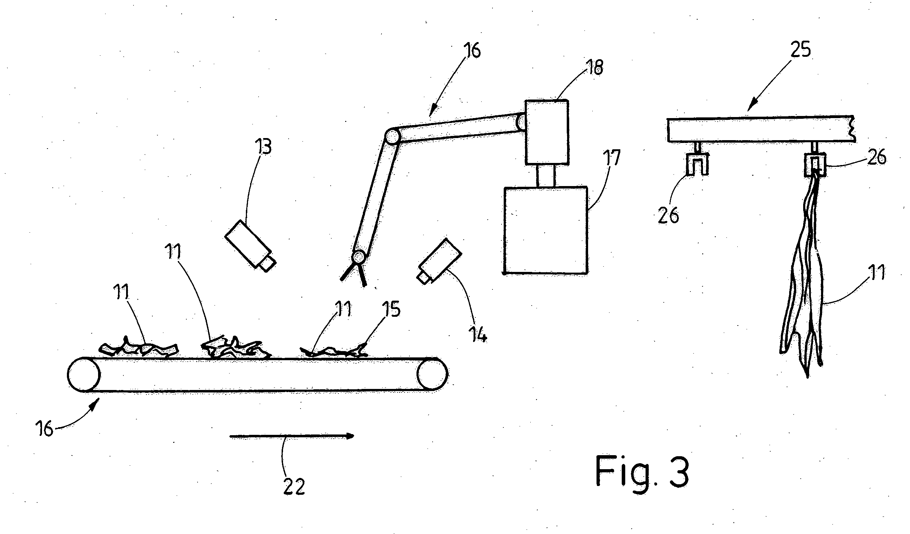

In einem weiteren Analyseschritt der Informationen werden die X-, Y- und Z-Koordinaten eines jeden Punktes des Wäschestücks 11 bestimmt und bevorzugt durch Stellen 15 für die Erfassung durch den Greifer 16 ermittelt (Fig. 3). Auch hier ist es denkbar, dass das Wäschestück 11 an einer von mehreren möglichen Stellen 15 für die Weiterbehandlung erfasst wird.

Nachdem das Wäschestück 11 durch den Greifer 16 erfasst wurde, kann es entweder einem weiteren Förderer 21 zugeführt werden oder entsprechend seinen Eigenschaften entsprechenden Behältern zum Sortieren zugeordnet werden. Bei dem in Fig. 3 dargestellten Ausführungsbeispiel der vorliegenden Erfindung wird das erfasste Wäschestück 11 von dem Greifer 16 an einem Hängeförderer 25 übergeben. Dieser Hängeförderer 25 weist eine Vielzahl von Transporthaken 26 bzw. -klammern auf, an die jeweils ein Wäschestück 11 durch den Greifer 16 übergeben wird. Das Wäschestück 11 wird dann hängend an einem Transporthaken 26 abgefördert. Die Transporthaken 26 laufen in einer Endlosschleife an dem Hängeförderer 25 und führen das Wäschestück 11 einer weiteren nicht dargestellten Behandlungsstation zu. Bei diesem Ausführungsbeispiel der vorliegenden Erfindung, bei dem die Wäschestücke 11 hängend weitertransportiert werden, kann es vorteilhaft sein, dass der Greifer 16 das Wäschestück 11 sogleich an einer Kante bzw. Ecke erfasst. So lässt sich das Wäschestück11 direkt mit dieser Ecke oder Kante an die Transporthaken 26 des Hängeförderers 25 übergeben.

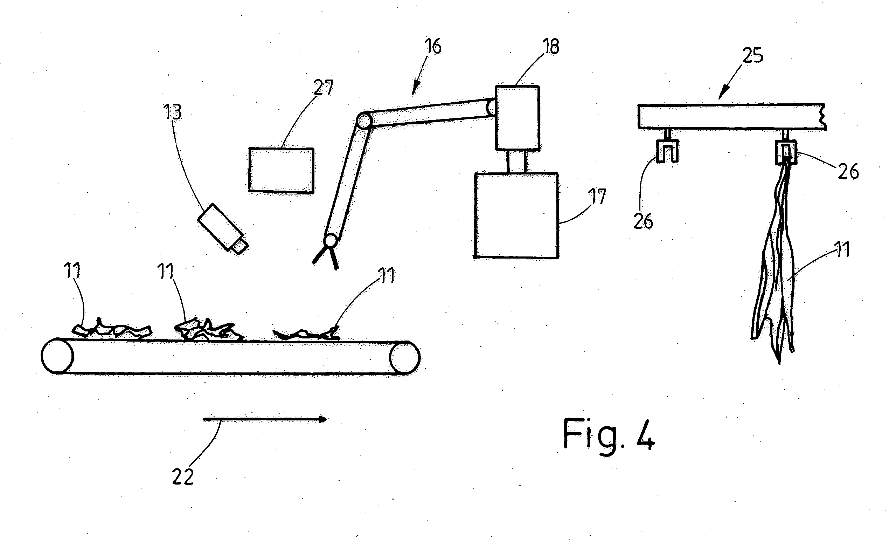

Neben der stereoskopischen Maßnahme, bei der mittels zwei Kameras 13 und 14 ein dreidimensionales Bild bzw. die Topographie des Wäschestücks 11 erstellt wird ist es auch denkbar, dass Laserscanning-Maßnahmen verwendet werden (Fig. 4). Dabei wird, genau wie oben beschrieben, ein vereinzeltes Wäschestück 11 auf ein Förderer 24 dem Greifer 16 zugeführt. Das Wäschestück 11 wird sodann durch einen Scan-Kopf 27 mit einem Laserstrahl beaufschlagt. Dieser Laserstrahl wird über das gesamte Wäschestück 11 bewegt bzw. wird das Wäschestück 11 unter dem Laserstrahl längs bewegt. Auch ist es denkbar, dass anstatt eines einzelnen Laserstrahls ein ganzer Fächer von Laserstrahlen auf das Wäschestück 11 gerichtet wird. Durch die Verzerrung des geraden Laserstrahls auf dem zerknitterten Wäschestück lässt sich die Topographie des Wäschestücks ermitteln. Dazu wird das Wäschestück 11 durch eine Kamera 13 aufgenommen und diese Daten einem nicht dargestellten Computer zugeführt, der aus den Informationen des verzerrten Laserstrahls auf dem Wäschestück die Topographie des Wäschestücks 11 rekonstruiert.

Auch bei diesen Maßnahmen lassen sich neben der Topographie auch andere Eigenschaften wie Farbe und Gewebeart durch die Kamera 13 ermitteln. Die der Bestimmung der Topographie folgenden Verfahrensschritte sind mit denen zuvor beschriebenen identisch. Somit lässt sich auch die Ermittlung der Topographie mittels Laserscannings auf die Verfahrensschritte des Vereinzeln, des Sortieren oder des Weiterführen des Wäschestücks 11 anwenden.

Neben den oben beschriebenen Maßnahmen der Stereoskopie und des Laserscannings sind auch noch weitere Techniken zur Erstellung eines dreidimensionalen Abbildes eines einzelnen Wäschestücks bzw. Topographie für das beanspruchte Verfahren denkbar.

### Bezugszeichenliste:

- 10: Wäschewagen
- 11: Wäschestück
- 12: Wäschehaufen
- 13: Kamera
- 14: Kamera
- 15: Stelle
- 16: Greifer
- 17: Basis
- 18: Greiferkopf
- 19: Greiferarm
- 20: Klammer
- 21: Förderer
- 22: Behandlungsrichtung
- 23: Behälter
- 24: Förderer
- 25: Hängeförderer
- 26: Transporthaken
- 27: Scan-Kopf

## Patentansprüche

1. Verfahren zum Erfassen eines Wäschestücks (11), wobei eine Stelle (15) des Wäschestücks (11) von einem Erfassungsmittel ergriffen oder angesaugt und vom Erfassungsmittel abtransportiert wird, wobei die Topographie des Wäschestücks (11) durch eine dreidimensionale bilderzeugende, bildgebende Maßnahme ermittelt wird, anhand der Topographie des Wäschestücks (11) die mindestens eine Stelle (15) ermittelt wird, an der das Wäschestück (11) durch das Erfassungsmittel erfasst werden soll und/oder bevorzugt erfasst werden kann, das Erfassungsmittel gezielt gesteuert an die Stelle (15) herangefahren und das Wäschestück (11) vom Erfassungsmittel erfasst wird, wobei die bevorzugte Stelle (15) zum Erfassen des Wäschestücks (11) aus mehreren Alternativen ausgesucht wird und die Stelle (15) ist, die von dem Erfassungsmittel besonders günstig bzw. schnell ergriffen werden kann und die vorteilhaft für die weitere Behandlung des Wäschestücks ist, und wobei als Stelle (15) ein Bereich des Wäschestücks (11) mit einer größten Krümmung, einem Knick, einer Falte, einer Kante und/oder einer Ecke des Wäschestücks (11) bestimmt wird.

2. Verfahren nach Anspruch 1, **dadurch gekennzeichnet, dass** die Topographie des Wäschestücks (11) durch einen Laserscanner erstellt wird.

3. Verfahren nach einem der vorhergehenden Ansprüche, **dadurch gekennzeichnet, dass** als Stelle (15), an der das Wäschestück (11) bevorzugt erfasst wird, ein Bereich des Wäschestücks (11) bestimmt wird, in dem Tangenten zweier benachbarter Punkte auf dem Wäschestück (11) einen spitzesten Winkel einschließen.

4. Verfahren nach einem der vorhergehenden Ansprüche, **dadurch gekennzeichnet, dass** das Wäschestück (11) an einer Falte oder einer Kante oder einer Ecke erfasst wird.

5. Verfahren nach einem der vorhergehenden Ansprüche, **dadurch gekennzeichnet, dass** mindestens eine solche Stelle (15) des Wäschestücks (11) ermittelt wird, die von dem Erfassungsmittel besonders günstig bzw. schnell ergriffen werden kann.

6. Verfahren nach einem der vorhergehenden Ansprüche, **dadurch gekennzeichnet, dass** die räumliche Orientierung des Erfassungsmittels der zu ergreifenden Stelle (15) des Wäschestücks (11) entsprechend angepasst wird.

7. Verfahren nach einem der vorhergehenden Ansprüche, **dadurch gekennzeichnet, dass** das Wäschestück (11) durch ein als Greifer (16) oder Sauger ausgebildetes Erfassungsmittel erfasst wird.

8. Verfahren nach einem der vorhergehenden Ansprüche, **dadurch gekennzeichnet, dass** die Position jedes Punktes des Wäschestücks (11) im Raum bzw. dessen Entfernung, insbesondere zum Erfassungsmittel, bestimmt wird und anhand der Positionen die Stellen (15) ermittelt werden, an denen das Wäschestück (11) ergriffen werden kann.

9. Verfahren nach einem der vorhergehenden Ansprüche, **dadurch gekennzeichnet, dass** durch die bildgebenden Maßnahmen störende Einflüsse, wie beispielsweise der Bildhintergrund ausgefiltert werden, vorzugsweise optisch ausgefiltert werden.

10. Verfahren nach einem der vorhergehenden Ansprüche, **dadurch gekennzeichnet, dass** ein Wäschestück (11), für das keine Stelle (15) zum Erfassen bestimmt werden kann, abgefördert und/oder umorientiert und anschließend die Topographie derselben erneut ermittelt wird.

11. Verfahren nach einem der vorhergehenden Ansprüche, **dadurch gekennzeichnet, dass** durch das Erfassungsmittel jeweils nur ein einzelnes Wäschestück (11) aufgenommen wird.

12. Verfahren zum Erfassen eines Wäschestücks (11) nach einem der Ansprüche 1 bis 11, **dadurch gekennzeichnet, dass** die Topographie des Wäschestücks (11) durch eine dreidimensionale bilderzeugende, bildgebende Maßnahme ermittelt und das Wäschestück (11) aufgrund der Topographie durch das Erfassungsmittel entsprechenden weiteren Behandlungsvorrichtungen zugeführt wird.

13. Verfahren nach Anspruch 12, **dadurch gekennzeichnet, dass** durch die ermittelte Topographie Eigenschaften des Wäschestücks (11), wie beispielsweise Größe oder Form, ermittelt werden und/oder die Topographie durch bildgebende Maßnahmen ermittelt wird und Eigenschaften des Wäschestücks (11), wie beispielsweise Farbe oder Gewebeart, ermittelt werden und/oder durch das Erfassungsmittel das Gewicht des erfassten Wäschestücks (11) bestimmt wird.

14. Verfahren zum Erfassen eines Wäschestücks (11) nach einem der Ansprüche 1 bis 11, wobei eine Stelle (15) des Wäschestücks (11) von einem Erfassungsmittel ergriffen oder angesaugt und vom Erfassungsmittel abtransportiert wird, **dadurch gekennzeichnet, dass** durch das Erfassen eines Wäschestücks (11) durch das Erfassungsmittel der Wäschehaufen (12) gezielt vereinzelt wird.

## Claims

1. A method for capturing an item (11) of laundry, wherein a point (15) of the item (11) of laundry is grabbed or drawn by suction by a capturing means and is transported away by the capturing means, wherein the topography of the item (11) of laundry is ascertained by a three-dimensional image generating, image-forming measure, the at least one point (15) at which the item (11) of laundry is intended to be captured and/or preferably can be captured by the capturing means is ascertained on the basis of the topography of the item (11) of laundry, the capturing means is moved to the point (15) in a specifically controlled manner, and the item (11) of laundry is captured by the capturing means, wherein the preferred point (15) for capturing the item (11) of laundry is chosen from several alternatives and is the point (15) which can be grabbed by the capturing means in a particularly expedient or rapid manner and is advantageous for the further treatment of the item of laundry, and wherein a region of the item (11) of laundry with a very large curvature, a bend, a fold, an edge and/or a corner of the item (11) of laundry is determined as the point (15).

2. The method according to Claim 1, **characterized in that** the topography of the item (11) of laundry is created by a laser scanner.

3. The method according to either of the preceding claims, **characterized in that** a region of the item (11) of laundry in which tangents of two adjacent points on the item (11) of laundry form an extremely acute angle is determined as the point (15) at which the item (11) of laundry is preferably captured.

4. The method according to one of the preceding claims, **characterized in that** the item (11) of laundry is captured at a fold or an edge or a corner.

5. The method according to one of the preceding claims, **characterized in that** at least one such point (15) of the item (11) of laundry which can be grabbed by the capturing means in a particularly expedient or rapid manner is ascertained.

6. The method according to one of the preceding claims, **characterized in that** the spatial orientation of the capturing means is accordingly matched to the point (15) of the item (11) of laundry which is to be grabbed.

7. The method according to one of the preceding claims, **characterized in that** the item (11) of laundry is captured by a capturing means which is in the form of a grabber (16) or suction device.

8. The method according to one of the preceding claims, **characterized in that** the position of each point of the item (11) of laundry in space or the distance of the said point, in particular in relation to the capturing means, is determined, and the points (15) at which the item (11) of laundry can be grabbed are ascertained on the basis of the positions.

9. The method according to one of the preceding claims, **characterized in that** interfering influences, such as the image background for example, are filtered out, preferably are optically filtered out, by the image-forming measures.

10. The method according to one of the preceding claims, **characterized in that** an item (11) of laundry for which no capturing point (15) can be determined is conveyed away and/or reoriented and then the topography of the said item of laundry is ascertained once again.

11. The method according to one of the preceding claims, **characterized in that** in each case only one single item (11) of laundry is picked up by the capturing means.

12. The method for capturing an item (11) of laundry according to one of Claims 1 to 11, **characterized in that** the topography of the item (11) of laundry is ascertained by a three-dimensional image generating, image-forming measure and the item (11) of laundry is fed to corresponding further treatment apparatuses by the capturing means on the basis of the topography.

13. The method according to Claim 12, **characterized in that** properties of the item (11) of laundry, such as the size or shape for example, are ascertained on the basis of the ascertained topography and/or the topography is ascertained by image-forming measures and properties of the item (11) of laundry, such as colour or type of fabric for example, are ascertained and/or the weight of the captured item (11) of laundry is determined by the capturing means.

14. The method for capturing an item (11) of laundry according to one of Claims 1 to 11, wherein a point (15) of the item (11) of laundry is grabbed or drawn by suction by a capturing means and is transported away by the capturing means, **characterized in that** the pile (12) of laundry is specifically separated by the capturing means capturing an item (11) of laundry.

## Revendications

1. Procédé de détection d'un article de linge (11), un point (15) de l'article de linge (11) étant saisi ou aspiré par un moyen de préhension et emporté par le moyen de préhension, la topographie de l'article de linge (11) étant déterminée par une mesure de génération d'image qui génère une image tridimensionnelle, l'au moins un point (15) où l'article de linge (11) doit être saisi et/ou de préférence peut être saisi par le moyen de préhension étant déterminé sur la base de la topographie de l'article de linge (11), le moyen de préhension étant déplacé de manière commandée et ciblée vers le point (15) et l'article de linge (11) étant saisi par le moyen de préhension, le point préféré (15) pour saisir l'article de linge (11) étant choisi parmi plusieurs alternatives et le point (15) étant celui qui peut être saisi de manière particulièrement favorable et rapide par le moyen de préhension et qui est avantageux pour le traitement ultérieur de l'article de linge, et une zone de l'article de linge (11) présentant une plus grande courbure, une froissure, un pli, un bord et/ou un coin de l'article de linge (11) étant déterminé(e) comme point (15).

2. Procédé selon la revendication 1, **caractérisé en ce que** la topographie de l'article de linge (11) est établie par un scanner laser.

3. Procédé selon l'une des revendications précédentes, **caractérisé en ce qu'**une zone de l'article de linge (11) dans laquelle des tangentes en deux points adjacents de l'article de linge (11) forment un angle aigu maximal, est déterminée comme point (15) où l'article de linge (11) est de préférence saisi.

4. Procédé selon l'une des revendications précédentes, **caractérisé en ce que** l'article de linge (11) est saisi au niveau d'un pli ou d'un bord ou d'un coin.

5. Procédé selon l'une des revendications précédentes, **caractérisé en ce qu'**au moins un point (15) de l'article de linge (11) est déterminé qui peut être saisi de manière particulièrement favorable et rapide par le moyen de préhension.

6. Procédé selon l'une des revendications précédentes, **caractérisé en ce que** l'orientation spatiale du moyen de préhension est adaptée de manière appropriée au point (15) de l'article de linge (11) à saisir.

7. Procédé selon l'une des revendications précédentes, **caractérisé en ce que** l'article de linge (11) est saisi par un moyen de préhension conçu comme une pince (16) ou un élément d'aspiration.

8. Procédé selon l'une des revendications précédentes, **caractérisé en ce que** la position de chaque point de l'article de linge (11) dans l'espace ou sa distance, notamment par rapport au moyen de préhension, est déterminée et les points (15) où l'article de linge (11) peut être saisi sont déterminés sur la base des positions.

9. Procédé selon l'une des revendications précédentes, **caractérisé en ce que** les influences perturbatrices, telles que l'arrière-plan d'image, sont filtrées, de préférence filtrées optiquement, par les mesures de génération d'image.

10. Procédé selon l'une des revendications précédentes, **caractérisé en ce qu'**un article de linge (11), pour lequel aucun point (15) de préhension ne peut être déterminé, est évacué et/ou réorienté et sa topographie est alors à nouveau déterminée.

11. Procédé selon l'une des revendications précédentes, **caractérisé en ce qu'**un seul article de linge (11) est reçu par le moyen de préhension.

12. Procédé de détection d'un article de linge (11) selon l'une des revendications 1 à 11, **caractérisé en ce que** la topographie de l'article de linge (11) est déterminée par une mesure de génération d'image générant une image tridimensionnelle et l'article de linge (11) est amené à des dispositifs de traitement supplémentaires appropriés par le moyen de préhension sur la base de la topographie.

13. Procédé selon la revendication 12, **caractérisé en ce que** les propriétés de l'article de linge (11), comme par exemple la taille ou la forme, sont déterminées par la topographie déterminée et/ou la topographie est déterminée par des mesures de génération d'image et les propriétés de l'article de linge (11), comme par exemple la couleur ou le type de tissu, sont déterminées et/ou le poids de l'article de linge (11) saisi est déterminé par le moyen de préhension.

14. Procédé de préhension d'un article de linge (11) selon l'une des revendications 1 à 11, un point (15) de l'article de linge (11) étant saisi ou aspiré par un moyen de préhension et emporté par le moyen de préhension, **caractérisé en ce que** la pile de linge (12) est isolée de manière ciblée par la préhension d'un article de linge (11) par le moyen de préhension.
